# EUROPÄISCHE PATENTSCHRIFT

(11) **EP 3 756 933 B1**
(45) Veröffentlichungstag und Bekanntmachung des Hinweises auf die Patenterteilung: **05.10.2022**
(21) Anmeldenummer: 19020409.9
(22) Anmeldetag: 28.06.2019
(51) Int. Cl.: B60L 53/16, H01R 24/86, H01R 107/00

(54) **LADESTECKVERBINDER UND LADESTECKVERBINDUNGSSYSTEM**
CHARGING CONNECTOR AND CHARGING CONNECTION SYSTEM
CONNECTEUR ENFICHABLE DE CHARGE ET SYSTÈME DE CONNEXION ENFICHABLE DE CHARGE

(43) Veröffentlichungstag der Anmeldung: 30.12.2020
(73) Patentinhaber: eLoaded GmbH, 6020 Innsbruck (AT)
(72) Erfinder: Steinbacher, Frank, A-6020 Innsbruck (DE)
(74) Vertreter: Kienle, Thomas

(56) Entgegenhaltungen:
- US-A1- 2013 249 484
- US-A1- 2014 094 045
- US-A1- 2015 258 905
- US-A1- 2017 166 070
- US-A1- 2018 345 804
- US-B2- 10 944 207

## Beschreibung

Die vorliegende Erfindung betrifft einen Ladesteckverbinder sowie ein Ladesteckverbindungssystem mit Ladesteckverbindern.

### STAND DER TECHNIK

Zum Laden bzw. Entladen von Elektrofahrzeugen mit Strom werden im Allgemeinen Lade-/Entladevorrichtungen eingesetzt. Im Heimbereich nennt man diese Wallbox, da sie meistens an einer Hauswand befestigt sind. Im öffentlichen Raum werden häufig Ladesäulen aufgestellt. Wallboxen und Ladesäulen haben meist eine oder mehrere Steckdosen. Die Steckdosen werden auch als Ladepunkte bezeichnet. Ein Ladekabel mit Stecker ist an der Steckdose anschließbar oder bereits angeschlagen und verbindet das Elektrofahrzeug elektrisch mit der Lade-/Entladevorrichtung.

Es sind verschiedene Steckverbindungstypen bekannt, so z. B.:
- Schuko-Stecker;
- IEC 62196-2 Typ 1, eine Einphasen-Wechselstromverbindung;
- IEC 62196-2 Typ 2, eine Ein- und Dreiphasenwechselstromverbindung und
- IEC 62196-2 Typ 3, eine Ein- und Dreiphasenwechselstromverbindung mit Schutzmechanismen

Typ-2-Steckverbindungen werden überwiegend in Europa eingesetzt und erlauben auch das Laden mit Wechselstrom bei Leistungsabgaben von meist ca. 22kW.

Beim Laden mit Wechselstrom ist in den Elektrofahrzeugen meist ein Wandler vorgesehen, der den Wechselstrom in den für das Batterieladen notwendigen Gleichstrom wandelt. Für schnelles Laden mit hoher Leistung wäre jedoch ein nachteilig großer und teurer Wandler in jedem Elektrofahrzeug notwendig. Deshalb setzt die Industrie beim Schnellladen zunehmend auf Gleichspannungs- bzw. Gleichstromladesäulen, auch DC-Säule, DC-Ladesäule oder DC-Schnell-Lader genannt.

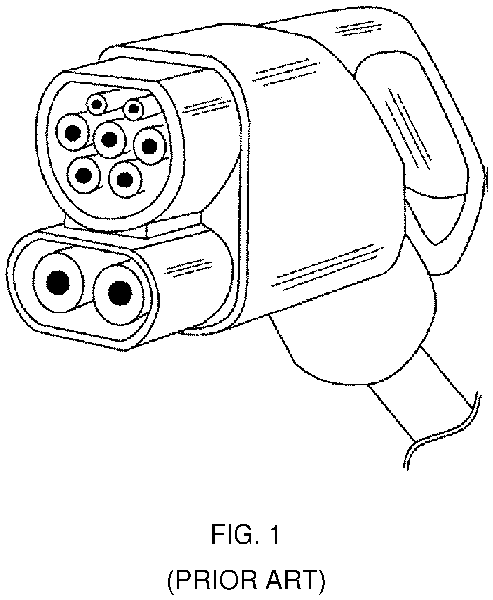

Folgende Schnelllade-Steckverbindungen haben sich bisher etabliert:
- CCS, Combined Charging System, zu Deutsch: kombiniertes Ladesystem, ist ein von deutschen Automobilherstellern entwickelter und seit 2014 EU-weit bindender Standard, der das Laden mit Wechselstrom und Gleichstrom beschreibt. Hierbei ist ein elektrofahrzeugseitiger Stecker für das Wechselstromladen mit einem Typ-2-Stecker und für das Gleichstromladen mit zwei zusätzlichen Hochleistungs-Gleichstromlade-Pins ausgestattet, siehe Fig. 1.
- Chademo ist ein Standard, der u. a. von japanischen Automobilherstellern entwickelt wurde.
- Tesla Supercharger ist eine proprietäre Technologie von Tesla für das Laden von Tesla-Elektrofahrzeugen.

Aus der DE 102011082896 A1 und aus der DE 102011082897 A1 ist eine Ladebuchse mit neun Pins bekannt. Ein erster Pin ist ein Pilotkontakt, ein zweiter Pin ist ein Proxykontakt, ein dritter Pin ist ein Schutzleiterkontakt, ein vierter Pin ist ein Neutralleiterkontakt und ein fünfter Pin ist ein Phase-1-Kontakt. Ein achter Pin ist ein positiver Gleichstromkontakt, der über eine DC-plus-Leitung und über ein Leistungsschaltmittel mit einem Energiespeicher verbunden ist. Ein neunter Pin ist ein negativer Gleichstromkontakt, der über eine DC-minus-Leitung und über ein Leistungsschaltmittel mit einem Energiespeicher verbunden ist. Ein sechster Pin ist ein Phase-2-Kontakt, der über eine Phase-2-Leitung mit der DC-minus-Leitung verbunden ist. Ein siebter Pin ist ein Phase-3-Kontakt, der über eine Phase-3-Leitung mit der DC-plus-Leitung verbunden ist.

Aus der DE 102014215123 A1 ist ein Ladestecker mit mehreren Kontakten zur Übertragung von Information, zwei elektrischen Kontakten zum Laden mit Gleichstrom über einen ersten Gleichstromkreis sowie mit wenigstens zwei weiteren elektrischen Kontakten zum Laden mittels Gleichstrom über einen zweiten Gleichstromkreis bekannt. Der Ladestrom bei CCS ist auf 200 A begrenzt. Der Ladestrom kann nicht über die vorhandenen CCS-Kontakte erhöht werden, weil dadurch die zulässige Temperatur überschritten wird. Die weiteren elektrischen Kontakte erhöhen jedoch den Gesamtleitungsquerschnitt und ermöglich so das Laden mit über 200 A.

Aus der US 2013/249484 A2 ist ein Verfahren zum Laden zumindest eines Energiespeichers eines Elektrofahrzeugs über eine Ladestelle unter Verwendung eines ersten Anschlusses mit ersten Anschlusselementen eines mit der Ladestelle verbundenen Ladekabels bekannt. Dabei sind die ersten Anschlusselemente mit korrespondierenden zweiten Anschlusselementen eines fahrzeugseitigen zweiten Anschlusses verbunden und die ersten und zweiten Anschlusselemente sind zur Zuführung von Wechselstrom zum Laden des zumindest einen Energiespeichers ausgestaltet. Dabei wird dem Elektrofahrzeug über zumindest zwei erste Anschlusselemente oder zumindest zwei separate dritte Anschlusselemente des ersten Anschlusses Gleichstrom aus der Ladestelle zum Laden des zumindest einen Energiespeichers zugeführt, wobei über ein oder mehrere erste Anschlusselemente, auf denen kein Gleichstrom zum Laden geführt wird, eine PLC-Kommunikation zwischen Elektrofahrzeug und Ladestelle zum Austausch von Informationen betreffend den Ladevorgang stattfindet.

Aus der US 2018/345804 A1 ist eine Ladedose für ein elektrisch angetriebenes Fahrzeug bekannt, welches einen Grundkörper mit wenigstens einem Kontaktabschnitt mit elektrischen Kontakten zum formschlüssigen Aufnehmen eines Gegenkontaktabschnitts eines Ladesteckers mit elektrischen Gegenkontakten zum Ausbilden einer elektrischen Ladeverbindung zwischen den elektrischen Kontakten und den elektrischen Gegenkontakten aufweist, wobei der Grundkörper zumindest ein Heizelement zum Erwärmen des wenigstens einen Kontaktabschnitts aufweist.

Aus der US 2015/258905 A1 ist eine Ladungseinlassvorrichtung bekannt, welche ein Einlassgehäuse aufweist. Das Einlassgehäuse ist an einem Fahrzeugkarrosserieteil mit einem Ladeanschluss, welcher zu der Außenseite der Fahrzeugkarrosserie offen ist, angeordnet. Ferner weist die Ladungseinlassvorrichtung eine Endstelle, welche in dem Ladeanschluss angeordnet ist, und eine rückseitige Klemme, welche auf der entgegengesetzten Seite des Ladeanschlusses an dem Einlassgehäuse angeordnet ist, auf, wobei die rückseitige Klemme einen Kabel herausführenden Anschluss zum Verbinden der Klemme und eines elektrischen Kabels durch die Fahrzeugkarrosserie aufweist.

Somit besteht die Aufgabe der Erfindung darin einen verbesserten Ladesteckverbinder und ein verbessertes Ladesteckverbindungssystem bereitzustellen, insbesondere einen Ladesteckverbinder, der sowohl Wechselstromladen als auch Schnellladen mit hohem Gleichstrom unterstützt und der bezüglich einer Steckform und einer Pin-Belegung kompatibel mit Typ 2 und damit universeller einsetzbar ist.

### OFFENBARUNG DER ERFINDUNG

Erfindungsgemäß wird ein Ladesteckverbinder gemäß Anspruch 1 und ein Ladesteckverbindungssystem gemäß Anspruch 13 zur Verfügung gestellt.

Der erfindungsgemäße Ladesteckverbinder dient im Allgemeinen zum Trennen und Verbinden von elektrischen Leitungen. Zwei Ladesteckverbinder können kompatibel zueinander ausgelegt sein und durch Formschluss passend ausgerichtet ineinander steckbar sein. Der erfindungsgemäße Ladesteckverbinder umfasst insbesondere einen Stecker, eine Buchse, eine Kupplung oder eine Steckdose.

Der Begriff Elektrofahrzeug soll vorzugsweise folgende Bedeutungen umfassen:
- Reine Elektrofahrzeuge, angetrieben allein mit Akkustrom, englische Bezeichnung Battery Electric Vehicle, auch Batterieelektrische Fahrzeuge genannt;
- Fahrzeuge mit Elektroantrieb und Range-Extender;
- Hybridfahrzeuge, englisch Hybrid Electric Vehicle;
- Plug-In-Hybride, englisch Plug-In Hybrid Electric Vehicle;
- Brennstoffzellenfahrzeuge, englisch Fuel Cell Vehicle, und
- sonstige Energiespeicher, die über eine Gleichstrom- oder Wechselstromverbindung ladbar bzw. entladbar sind.

Vorzugsweise stellt der Ladesteckverbinder entweder Gleichstrom oder Wechselstrom zur Verfügung. Der zylinderförmige Kontaktabschnitt dient im Wesentlichen dazu, formschlüssig in einen kompatiblen weiteren Ladesteckverbinder gesteckt zu werden. Vorzugsweise fehlt der zylinderförmige Kontaktabschnitt ein Mantelstück, sodass eine zu einer Zylinderachse parallele Ebene entsteht bzw. der zylinderförmige Kontaktabschnitt ist an einer Stelle abgeflacht. Diese Ebene kann als Verpolschutz wirken. Der zylinderförmige Kontaktabschnitt umfasst im Wesentlichen einen Wechselstromkontakt und einen Neutralleiterkontakt, um Energie zu übertragen, insbesondere einen Einphasenwechselstrom von 230 V und bis zu 16 A - auch als Typ 2 AC Level 1 bezeichnet. Gemäß einer Weiterbildung kann der zylinderförmige Kontaktabschnitt bis zu sieben runde Kontaktstifte, bzw. -pins umfassen. Zwei dieser Kontaktstifte können für ein Kommunikation zum Elektrofahrzeug bzw. zu einem Ladepunkt vorgesehen sein, etwa ein Proximity-Pilot-Kontakt, um eine Anwesenheit des erfindungsgemäßen Ladesteckverbinders zu einem weiteren Ladesteckverbinder feststellen zu können und ein Control-Pilot-Kontakt, um Steuersignale zwischen dem Elektrofahrzeug und dem Ladepunkt austauschen zu können, etwa um die Bereitstellung von Gleichstrom oder Wechselstrom zu steuern. Desweiteren kann der zylinderförmige Kontaktabschnitt drei Außenleiterkontakte L1, L2 und L3, bzw. Wechselstromkontakte; einen Neutralleiter und einen Schutzleiter PE umfassen, um einen Dreiphasenwechselstrom von 230 V oder 400 V und bis zu 32 A fließen zu lassen - auch als Typ 2 AC Level 2 bezeichnet. Im Allgemeinen weist der Ladesteckverbinder ein oder zwei Fallen auf, mittels denen der Ladesteckverbinder elektromechanisch verriegelt werden kann, um ein ungewolltes Abziehen des erfindungsgemäßen Ladesteckverbinders in einem gesteckten Zustand zu verhindern.

Der erste Gleichstromkontakt ist vorzugweise ein elektrischer Pluspol, der zweite Gleichstromkontakt ein elektrischer Minuspol. Während der eine bzw. die mehreren Wechselstromkontakte und der Neutralleiterkontakt vorzugsweise als runde Kontaktstifte bzw. Pins ausgelegt sind, ist es vorgesehen den ersten und zweiten Gleichstromkontakt nicht als Kontaktstift bzw. -pin auszulegen, sondern als flächigen bzw. ausgedehnten Kontaktabschnitt. Insbesondere ist die Kontaktfläche jedes Gleichstromkontakts größer als die Kontaktstiftfläche eines der Wechselstromkontakte oder des Neutralleiterkontakts. Aufgrund des proportionalen Zusammenhangs von Strom und einer vom Strom durchflossenen Querschnittsfläche kann über den ersten und zweiten Gleichstromkontakt oder weitere Kontaktstromflächen so ein höherer Gleichstrom fließen als über Gleichstromkontaktstifte, wie sie etwa von CCS bzw. Combo 2-Steckern bekannt sind. Höherer Gleichstrom erlaubt schnelleres Laden, bzw. Schnellladen. Durch das Vorhandensein des einen bzw. der mehreren Wechselstromkontakten und des Neutralleiterkontakts kann der erfindungsgemäße Ladesteckverbinder sowohl Wechselstromladen als auch Laden mit hohem Gleichstrom unterstützen. Im Folgenden werden die Gleichstromkontakte und die sieben Kontaktstifte vereinfacht auch als die Kontakte bezeichnet.

Gemäß der Erfindung sind der erste und zweite Gleichstromkontakt an dem zylinderförmigen Kontaktabschnitt angeordnet. Genauer gesagt sind der erste und der zweite Gleichstromkontakt an der Mantelfläche und bündig zur Mantelfläche des zylinderförmigen Kontaktabschnitts angeordnet. Erfindungsgemäß sind die Oberflächen des ersten und zweiten Gleichstromkontakts gewölbt. Dadurch ist der Ladesteckverbinder insbesondere bezüglich seiner Steckform und seiner Pin-Belegung kompatibel mit Typ 2 und damit universeller einsetzbar.

In einer weiteren bevorzugten Ausführungsform können der erste und zweite Gleichstromkontakt jeweils eine Kontaktfläche von größer 50 mm² aufweisen. Die Gleichstromkontakte umfassen vorzugsweise ein Strom leitendes Material, bzw. ein hochleitfähiges Material, d.h. ein Material mit einer Leitfähigkeit von größer oder gleich 10⁶ S/m, wie Graphen, Silber, Kupfer, Gold, Aluminium oder Wolfram. Bei einem stromdurchflossenen Querschnitt von größer oder gleich 50 mm², noch bevorzugter von größer oder gleich 70 mm², noch bevorzugter von 95 - 120 mm², kann ein Gleichstrom von 100 A, insbesondere 200 A oder mehr fließen. Diese Ausführungsform ermöglicht vorteilhaft das Laden mit hohem Gleichstrom. Je nach Material der Gleichstromkontakte können diese auch eine Kontaktfläche von kleiner 50 mm² aufweisen, um dennoch das Laden mit hohem Gleichstrom zu ermöglichen.

Vorzugsweise umfasst der Ladesteckverbinder einen Temperatursensor. Stromdurchflossene Bauelemente, wie etwa Kupferkabel, Kontakte, Pins und die Gleichstromkontakte erwärmen sich im Allgemeinen aufgrund ihres elektrischen Widerstandes. Eine Stromdichte in Kupfer soll vorzugsweise 1,2 bis 6 A/mm² nicht überschreiten, um unter Dauerlast eine unzulässige Erwärmung, bzw. Beschädigung zu vermeiden. Man spricht in diesem Zusammenhang im Allgemeinen auch von der Strombelastbarkeit. Mit Einsatz eines Temperatursensors kann vorteilhaft eine tatsächliche Strombelastbarkeit des erfindungsgemäßen Ladesteckverbinders ermittelt werden, die einen anderen Wert als eine rechnerische bzw. theoretische Strombelastbarkeit aufweisen kann. Die Strombelastbarkeit von Ladesteckverbindern hängt im Allgemeinen auch von der Dauer des Stromflusses ab. Je kürzer ein Ladesteckverbinder von Strom durchflossen wird, im Folgenden als Kurzladen bezeichnet, umso geringer ist seine Temperatur und umso höher ist seine Strombelastbarkeit. Wird ein Ladesteckverbinder anstatt von einem Dauer-Gleichstrom von einem gepulstem Gleichstrom durchflossen, im Folgenden als gepulstes Laden bezeichnet, und wird seine Temperatur mittels des Temperatursensors überwacht, so kann der Ladesteckverbinder gegebenenfalls mit höherem Strom beaufschlagt werden als bei Dauer-Gleichstrom. Im Gegenzug kann der Einsatz eines Temperatursensors das Kurzladen und/oder das gepulste Laden eine Kontaktfläche des ersten und zweiten Gleichstromkontakts von jeweils kleiner als 50 mm² bei gleichbleibender Energieübertragung ermöglichen. Zum Auswerten des Temperatursensors kann eine Verarbeitungseinrichtung bzw. ein Mikroprozessor im Ladesteckverbinder, in einem am Ladesteckverbinder angeschlossenen Kabel, in einem an dem Ladesteckverbinder angeschlossenen Elektrofahrzeug, in einem Ladepunkt und/oder in einer Ladesäule integriert sein.

Gemäß einer weiteren bevorzugten Ausführungsform umfasst der Ladesteckverbinder insbesondere eine Isolationsschicht. Die Isolationsschicht kann den ersten vom zweiten Gleichstromkontakt voneinander isolieren und sie kann den ersten und zweiten Gleichstromkontakt zusätzlich oder alternativ von dem wenigstens einen Wechselstromkontakt und dem Neutralleiterkontakt bzw. von einem der sieben Kontaktstifte elektrisch isolieren. Dies kann vor allem bei hohen Gleichströmen in den Gleichstromkontakten helfen, um einen elektrischen Kurzschluss, Durchschlag oder ein Übersprechen zwischen den Kontakten zu verringern oder zu vermeiden.

Der erste und zweite Gleichstromkontakt können vorteilhaft symmetrisch, insbesondere bezüglich einer Mittelachse eines Steckergesichts des Ladesteckverbinders, angeordnet sein. Die symmetrische Anordnung kann einen gleichmäßigeren elektrischen Kontakt zu einem weiteren Ladesteckverbinder im gesteckten Zustand ermöglichen.

Gemäß einer weiteren bevorzugten Weiterbildung kann der Ladesteckverbinder einen dritten und /oder weitere Gleichstromkontakte umfassen. Die Gleichstromkontakte können konzentrisch um den zylinderförmigen Kontaktabschnitt angeordnet sein. Je mehr Gleichstromkontakte umfasst sind, umso höher ist im Allgemeinen die Querschnittsfläche und umso höhere Ströme können unter Einhaltung der Strombelastbarkeit fließen.

Der Ladesteckverbinder umfasst vorzugsweise eine Schutzabdeckung, die den ersten und zweiten Gleichstromkontakt in einem nicht gesteckten Zustand abdeckt. Insbesondere kann die Schutzabdeckung alle Gleichstromkontakte abdecken. Die Schutzabdeckung bewirkt insbesondere Spritzwasser, Schmutz oder ähnliches von den Kontakten für eine optimale elektrische Leitfähigkeit fernzuhalten. Die Schutzabdeckung umfasst vorzugsweise eine Schutzkappe, die über den zylinderförmigen Kontaktabschnitt, d.h. über die Gleichstromkontakte steckbar ist; eine Hülse, die über den zylinderförmigen Kontaktabschnitt, d.h. über die Gleichstromkontakte geschoben werden kann und/oder einen Kamera-Shutter-artigen Verschluss. Insbesondere umfasst eine Ladebuchse den Kamera-Shutter-artigen Verschluss.

Gemäß einer weiteren bevorzugten Ausführungsform kann der Ladesteckverbinder ein Kabel mit wenigstens einer Wechselstromader, einer Neutralleiterader und einer ersten und zweiten Gleichstromader umfassen. Der erste und zweite Gleichstromkontakt sind insbesondere direkt mit der ersten bzw. zweiten Gleichstromader elektrisch verbunden. Vorzugsweise umfasst das Kabel je eine Ader für jeden Kontakt des Ladesteckverbinders. Der Ladesteckverbinder umfasst insbesondere keine Verschaltung bzw. schaltbare Verbindung der Kontakte miteinander.

Der erfindungsgemäße Ladesteckverbinder umfasst vorzugsweise ein Andruckelement, etwa eine Feder, um in einem gesteckten Zustand den ersten und zweiten Gleichstromkontakt an Gegenkontakte, etwas von einem weiteren Ladesteckverbinder, anzudrücken. Dadurch kann eine verbesserte elektrische Leitfähigkeit zwischen dem erfindungsgemäßen Ladesteckverbinder und dem weiteren Ladesteckverbinder erreicht werden.

Gemäß einer weiteren bevorzugten Ausführungsform umfasst der erfindungsgemäße Ladesteckverbinder einen Stecker, eine Buchse, einen Kupplung oder eine Steckdose. Ist der erfindungsgemäße Ladesteckverbinder ein Stecker, so kann der weitere Ladesteckverbinder etwa eine kompatible Buchse sein.

Das erfindungsgemäße Ladesteckverbindungssystem umfasst insbesondere einen ersten erfindungsgemäßen Ladesteckverbinder zum elektrisch Verbinden mit einem Ladesteckverbinder eines Elektrofahrzeugs, einen zweiten erfindungsgemäßen Ladesteckverbinder zum elektrisch Verbinden mit einem Ladepunkt und ein Kabel, das den ersten erfindungsgemäßen Ladesteckverbinder elektrisch mit dem zweiten erfindungsgemäßen Ladesteckverbinder verbindet. Das erfindungsgemäße Ladesteckverbindungssystem kann vorteilhaft ein fest an einer Ladesäule angeschlagenes Ladekabel ersetzen. Das erfindungsgemäße Ladesteckverbindungssystem kann unterschiedliche Steckverbindungstypen aufweisen, um Elektrofahrzeuge mit einem bestimmten Steckverbindungstyp an einem Ladepunkt mit einem anderen Steckverbindungstyp laden zu können. Das erfindungsgemäße Ladesteckverbindungssystem kann außerdem das wahlweise Laden mit Wechselstrom oder Gleichstrom in einem System vereinen.

Vorteilhafte Weiterbildungen der Erfindung sind in den Unteransprüchen angegeben und in der Beschreibung beschrieben.

### KURZBESCHREIBUNG DER ZEICHNUNGEN

Ausführungsbeispiele der Erfindung werden anhand der Zeichnungen und der nachfolgenden Beschreibung näher erläutert. Es zeigen:
- Figur 1: einen aus dem Stand der Technik bekannten CCS Combo 2 - Stecker,
- Figur 2: ein Ausführungsbeispiel eines Ladesteckers gemäß der Erfindung,
- Figur 3: ein Ausführungsbeispiel einer Ladebuchse gemäß der Erfindung,
- Figur 4: ein weiteres Ausführungsbeispiel eines Ladesteckers gemäß der Erfindung und
- Figur 5: ein Beispiel, das nicht Teil der Erfindung ist.

### AUSFÜHRUNGSFORMEN DER ERFINDUNG

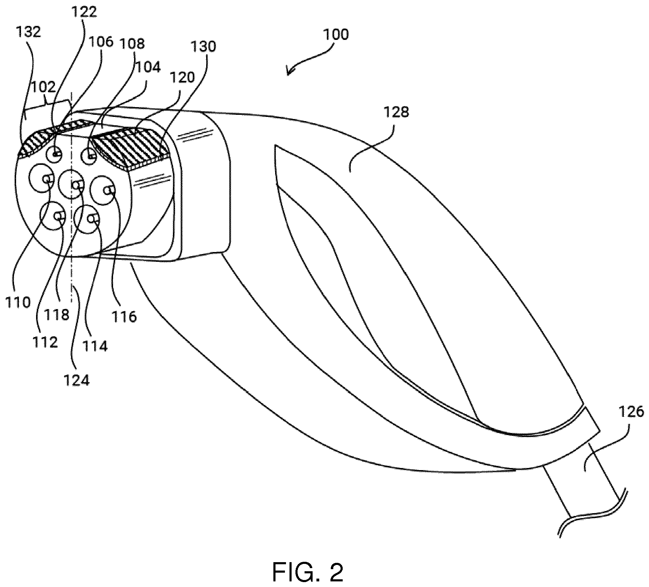

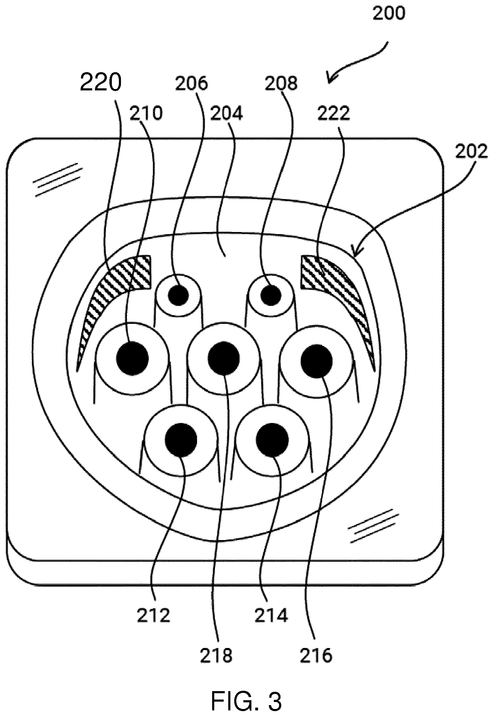

In der Figur 2 ist ein Ladestecker 100 gemäß eines Ausführungsbeispiels der Erfindung gezeigt, der einem Ladesteckverbinder in Stecker-Ausführung entspricht und zum Laden eines Elektrofahrzeugs mit Gleich- oder Wechselstrom dient. Der Ladestecker 100 umfasst einen zylinderförmigen Kontaktabschnitt 102 mit einer Abflachung 104, die als Verpolschutz wirkt. Der zylinderförmige Kontaktabschnitt 102 umfasst einen Proximity-Pilot-Kontaktstift 106, um eine Anwesenheit des Ladesteckers 100 zu einer Ladebuchse, siehe Figur 3, feststellen zu können und einen Control-Pilot-Kontaktstift 108, um Steuersignale zwischen dem Elektrofahrzeug und einem Ladepunkt austauschen zu können, etwa um die Beaufschlagung mit Gleichstrom oder Wechselstrom zu steuern. Des Weiteren umfasst der zylinderförmige Kontaktabschnitt 102 drei Außenleiterkontaktstifte L1 110, L2 112 und L3 114, einen Neutralleiterkontaktstift 116 und einen Schutzleiterkontaktstift 118, um einen Dreiphasenwechselstrom von 230 V oder 400 V und bis zu 32 A fließen zu lassen - auch als Typ 2 AC Level 2 bezeichnet. Ferner umfasst der Ladestecker 100 eine erste Gleichstromkontaktfläche 120, die einen elektrischen Pluspol bildet, und eine zweite Gleichstromkontaktfläche 122, die einen elektrischen Minuspol bildet. Die Gleichstromkontaktflächen 120, 122 sind gewölbt und bündig an einer Mantelfläche des zylinderförmigen Kontaktabschnitts 102 und symmetrisch bezüglich einer Mittelachse 124 eines Steckergesichts des Ladesteckers 100 angeordnet. Die symmetrische Anordnung bewirkt in einem gesteckten Zustand einen gleichmäßigeren elektrischen Kontakt zur Ladebuchse, siehe Fig. 3. Die Abflachung 104 und der zylinderförmige Kontaktabschnitt 102 bilden zwei Kanten, an bzw. um die die Gleichstromkontaktflächen 120, 122 angeordnet sind. Die Gleichstromkontaktflächen 120, 122 weisen je eine Oberfläche von größer 50 mm² auf und sind aus Kupfer hergestellt, damit Ströme von 200 A oder mehr durch deren Oberflächen fließen können. Der zylinderförmige Kontaktabschnitt 102 umfasst zwei Isolationsschichten 130, 132, die jeweils zwischen den Gleichstromkontaktflächen 120, 122 und den übrigen Kontakten 110 bis 124 angeordnet sind. Die Isolationsschichten 130, 132 verringern oder verhindern einen elektrischen Kurzschluss, Durchschlag oder ein Übersprechen zwischen den Kontakten 106 bis 124.

Die Kontakte 110 bis 124 sind jeweils mit einer Ader elektrisch verbunden. Die Adern werden gebündelt in einem Kabel 126 vom Ladestecker 100 weggeführt. Zur Handhabung des Ladesteckers 100 ist zwischen dem zylinderförmigen Kontaktabschnitt 102 und dem Kabel 126 ein Griff 128 angeordnet.

Der Ladestecker 100 ermöglicht sowohl Wechselstromladen als auch Schnellladen mit hohem Gleichstrom und ist bezüglich seiner Steckform und seiner Kontaktstift-Belegung kompatibel mit Typ 2 und damit universeller einsetzbar.

In der Figur 3 ist eine Ladebuchse 200 gemäß eines weiteren Ausführungsbeispiels der Erfindung gezeigt, die einem Ladesteckverbinder in Buchsen-Ausführung entspricht und zum Laden eines Elektrofahrzeugs mit Gleich- oder Wechselstrom dient. Die Ladebuchse 200 kann in ein Elektrofahrzeug oder in einen Ladepunkt einer Ladesäule integriert sein. Die Ladebuchse 200 umfasst einen zylinderförmigen Kontaktabschnitt 202 mit einer Abflachung 204, die als Verpolschutz wirkt. Der zylinderförmige Kontaktabschnitt 202 umfasst einen Proximity-Pilot-Kontakt 206, um eine Anwesenheit des Ladesteckers 100, siehe Fig. 2, in der Ladebuchse 200 feststellen zu können und einen Control-Pilot-Kontakt 208, um Steuersignale zwischen dem Elektrofahrzeug und dem Ladepunkt austauschen zu können, etwa um die Bereitstellung von Gleichstrom oder Wechselstroms zu steuern. Des Weiteren umfasst der zylinderförmige Kontaktabschnitt 202 drei Außenleiterkontakte L1 210, L2 212 und L3 214, einen Neutralleiterkontakt 216 und einen Schutzleiterkontakt 218, um einen Dreiphasenwechselstrom von 230 V oder 400 V und bis zu 32 A fließen zu lassenauch als Typ 2 AC Level 2 bezeichnet. Ferner umfasst die Ladebuchse 200 eine erste Gleichstromkontaktfläche 220, die einen elektrischen Pluspol bildet, und eine zweite Gleichstromkontaktfläche 222, die einen elektrischen Minuspol bildet. Die Gleichstromkontaktflächen 220, 222 sind gewölbt und bündig an einer Mantelfläche des zylinderförmigen Kontaktabschnitts 202 angeordnet. Die Abflachung 204 und der zylinderförmige Kontaktabschnitt 202 bilden zwei Kanten, an bzw. um die die Gleichstromkontaktflächen 220, 222 angeordnet sind. Die Gleichstromkontaktflächen 220, 222 weisen je eine Oberfläche von größer 50 mm² auf und sind aus Kupfer oder einem anderen hochleitfähigen Material hergestellt, damit Ströme von 200 A oder mehr durch die Oberfläche fließen können.

Die Ladebuchse 200 ermöglicht sowohl Wechselstromladen als auch Schnellladen, insbesondere mit hohem Gleichstrom, und ist bezüglich ihrer Steckform und ihrer Kontakt-Belegung kompatibel mit Typ 2 und damit universeller einsetzbar.

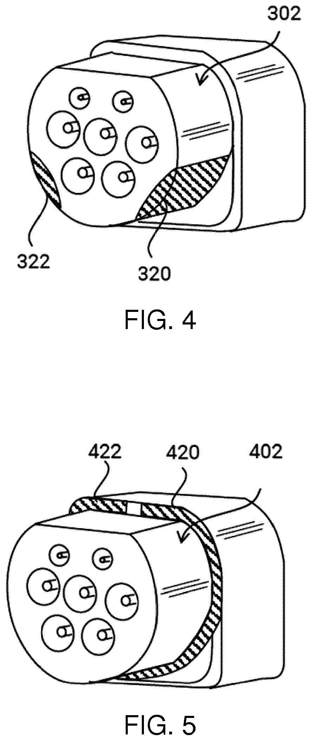

In der Figur 4 ist ein zylinderförmiger Kontaktabschnitt 302 eines Ladesteckers gemäß eines weiteren Ausführungsbeispiels der Erfindung gezeigt, der im Wesentlichen dem zylinderförmigen Kontaktabschnitt 102 von Fig. 3 entspricht. Der zylinderförmige Kontaktabschnitt 302 weist jedoch zwei Gleichstromkontaktflächen 320, 322 an einer Mantelfläche des zylinderförmigen Kontaktabschnitts 302 etwa auf Höhe der Außenleiterkontaktstifte L2 und L3 auf. Gemäß eines weiteren Ausführungsbeispiels können vier Gleichstromkontaktflächen 120, 122, 320, 322 an einem zylinderförmigen Kontaktabschnitt angeordnet sein und zwar zwei Gleichstromkontaktflächen 120, 122 wie in der Figur 2 gezeigt und zwei Gleichstromkontaktflächen 120, 122, 320, 322 wie in der Figur 4 gezeigt.

In der Figur 5 ist ein zylinderförmiger Kontaktabschnitt 402 eines Ladesteckers gemäß einem Beispiel, das nicht Teil der Erfindung ist, gezeigt, der im Wesentlichen dem zylinderförmigen Kontaktabschnitt 102 von Fig. 2 entspricht. Der zylinderförmige Kontaktabschnitt 402 weist jedoch einen Stecker-Anschlagbereich auf, der sich vom zylinderförmigen Kontaktabschnitt zu einem Griff fortsetzt und von einem Zylinderdurchmesser des zylinderförmigen Kontaktabschnitts 402 radial vorsteht. Der Stecker-Anschlagbereich weist zwei Gleichstromkontaktflächen 420, 422 auf, die radial vom zylinderförmigen Kontaktabschnitt 402 vorstehen.

### BEZUGSZEICHENLISTE

- 100: Ladestecker
- 102: Zylinderförmiger Kontaktabschnitt
- 104: Abflachung
- 106: Proximity-Pilot-Kontaktstift
- 108: Control-Pilot-Kontaktstift
- 110: Außenleiterkontaktstift L1
- 112: Außenleiterkontaktstift L2
- 114: Außenleiterkontaktstift L3
- 116: Neutralleiterkontaktstift
- 118: Schutzleiterkontaktstift
- 120: Gleichstromkontaktfläche
- 122: Gleichstromkontaktfläche
- 124: Mittelachse
- 126: Kabel
- 128: Griff
- 130: Isolationsschicht
- 132: Isolationsschicht
- 200: Ladebuchse
- 202: Zylinderförmiger Kontaktabschnitt
- 204: Abflachung
- 206: Proximity-Pilot-Kontakt
- 208: Control-Pilot-Kontakt
- 210: Außenleiterkontakt L1
- 212: Außenleiterkontakt L2
- 214: Außenleiterkontakt L3
- 216: Neutralleiterkontakt
- 218: Schutzleiterkontakt
- 220: Gleichstromkontaktfläche
- 222: Gleichstromkontaktfläche
- 302: Zylinderförmiger Kontaktabschnitt
- 320: Gleichstromkontaktfläche
- 322: Gleichstromkontaktfläche
- 402: Zylinderförmiger Kontaktabschnitt
- 420: Gleichstromkontaktfläche
- 422: Gleichstromkontaktfläche

## Patentansprüche

1. Ladesteckverbinder (100; 200) zum Laden eines Elektrofahrzeugs mit Gleich- und/oder Wechselstrom umfassend:
einen zylinderförmigen Kontaktabschnitt (102; 202; 302; 402),
wobei der zylinderförmige Kontaktabschnitt (102; 202; 302; 402) wenigstens einen Wechselstromkontakt (110, 112, 114; 210, 212, 214) und einen Neutralleiterkontakt (116; 216) aufweist, und
einen ersten (120, 122; 220, 222; 320, 322; 420, 422) und einen zweiten Gleichstromkontakt (122, 120; 222, 220; 322, 320; 422, 420) wobei
der erste (120, 122; 220, 222; 320, 322; 420, 422) und zweite Gleichstromkontakt (122, 120; 222, 220; 322, 320; 422, 420) als Kontaktflächen (120, 122; 220, 222; 320, 322; 420, 422) ausgebildet sind,
**dadurch gekennzeichnet, dass**
die Kontaktflächen (120, 122; 220, 222; 320, 322; 420, 422) gewölbt und bündig an der Mantelfläche des zylinderformigen Kontaktabschnitts (102; 202; 302; 402) angeordnet sind.

2. Ladesteckverbinder (100; 200) nach Anspruch 1 **dadurch gekennzeichnet, dass** der erste (120, 122; 220, 222; 320, 322; 420, 422) und zweite Gleichstromkontakt (122, 120; 222, 220; 322, 320; 422, 420) jeweils eine Kontaktfläche (120, 122; 220, 222; 320, 322; 420, 422) von größer 50 mm² aufweisen.

3. Ladesteckverbinder (100; 200) nach einem der vorhergehenden Ansprüche
**dadurch gekennzeichnet, dass**
der Ladesteckverbinder (100; 200) einen Temperatursensor umfasst.

4. Ladesteckverbinder (100; 200) nach einem der vorhergehenden Ansprüche
**dadurch gekennzeichnet, dass**
der erste (120, 122; 220, 222; 320, 322; 420, 422) und zweite Gleichstromkontakt (122, 120; 222, 220; 322, 320; 422, 420) ein leitfähiges Material, insbesondere Kupfer, umfassen.

5. Ladesteckverbinder (100; 200) nach einem der vorhergehenden Ansprüche
**dadurch gekennzeichnet, dass**
der erste (120, 122; 220, 222; 320, 322; 420, 422) und zweite Gleichstromkontakt (122, 120; 222, 220; 322, 320; 422, 420) voneinander und/oder von dem wenigstens einen Wechselstromkontakt (110, 112, 114; 210, 212, 214) und von dem Neutralleiterkontakt (116; 216) durch eine Isolationsschicht (130, 132) elektrisch isoliert sind.

6. Ladesteckverbinder (100; 200) nach einem der vorhergehenden Ansprüche
**dadurch gekennzeichnet, dass**
der erste (120, 122; 220, 222; 320, 322; 420, 422) und zweite Gleichstromkontakt (122, 120; 222, 220; 322, 320; 422, 420) symmetrisch bezüglich einer Mittelachse (124) eines Steckergesichts des Ladesteckverbinders (100; 200) angeordnet sind.

7. Ladesteckverbinder (100; 200) nach einem der vorhergehenden Ansprüche
**dadurch gekennzeichnet, dass**
der Ladesteckverbinder (100; 200) einen dritten (120, 122; 220, 222; 320, 322; 420, 422) und/oder weitere Gleichstromkontakte (122, 120; 222, 220; 322, 320; 422, 420) umfasst.

8. Ladesteckverbinder (100; 200) nach einem der vorhergehenden Ansprüche
**dadurch gekennzeichnet, dass**
der Ladesteckverbinder (100; 200) eine Schutzabdeckung umfasst, die den ersten (120, 122; 220, 222; 320, 322; 420, 422) und zweiten Gleichstromkontakt (122, 120; 222, 220; 322, 320; 422, 420) in einem nicht gesteckten Zustand abdeckt.

9. Ladesteckverbinder nach Anspruch 6,
**dadurch gekennzeichnet, dass** die Schutzabdeckung einen Kamera-Shutter-artigen Verschluss aufweist.

10. Ladesteckverbinder (100; 200) nach einem der vorhergehenden Ansprüche
**dadurch gekennzeichnet, dass**
der Ladesteckverbinder (100; 200) ein Kabel (126) mit wenigstens einer Wechselstromader, einer Neutralleiterader und einer ersten und zweiten Gleichstromader umfasst.

11. Ladesteckverbinder (100; 200) nach einem der vorhergehenden Ansprüche
**dadurch gekennzeichnet, dass**
der Ladesteckverbinder (100; 200) wenigstens ein Andruckelement umfasst, um in einem gesteckten Zustand den ersten (120, 122; 220, 222; 320, 322; 420, 422) und zweiten Gleichstromkontakt (122, 120; 222, 220; 322, 320; 422, 420) an Gegenkontakte (120, 122; 220, 222; 320, 322; 420, 422) anzudrücken.

12. Ladesteckverbinder (100; 200) nach einem der vorhergehenden Ansprüche
**dadurch gekennzeichnet, dass**
der Ladesteckverbinder (100; 200) einen Stecker (100), eine Buchse (200), eine Kupplung oder eine Steckdose umfasst.

13. Ladesteckverbindungssystem mit
einem ersten Ladesteckverbinder (100; 200) nach einem der vorhergehenden Ansprüche zum elektrisch Verbinden mit einem Ladesteckverbinder eines Elektrofahrzeugs,
einem zweiten Ladesteckverbinder (100; 200) nach einem der vorhergehenden Ansprüche zum elektrisch Verbinden mit einer Ladepunkt und
einem Kabel (126), das den ersten Ladesteckverbinder (100; 200) elektrisch mit dem zweiten Ladesteckverbinder (100; 200) verbindet.

## Claims

1. A charging connector (100; 200) for charging an electric vehicle with direct and/or alternating current comprising:
a cylindrical contact portion (102; 202; 302; 402),
wherein the cylindrical contact portion (102; 202; 302; 402) has at least one alternating current contact (110, 112, 114; 210, 212, 214) and a neutral conductor contact (116; 216), and
a first (120, 122; 220, 222; 320, 322; 420, 422) and a second direct current contact (122, 120; 222, 220; 322, 320; 422, 420),
wherein the first (120, 122; 220, 222; 320, 322; 420, 422) and second direct current contact (122, 120; 222, 220; 322, 320; 422, 420) are embodied as contact surfaces (120, 122; 220, 222; 320, 322; 420, 422),
**characterized in that** the contact surfaces (120, 122; 220, 222; 320, 322; 420, 422) are curved and arranged flush on the lateral surface of the cylindrical contact portion (102; 202; 302; 402).

2. The charging connector (100; 200) according to claim 1, **characterized in that** the first (120, 122; 220, 222; 320, 322; 420, 422) and second direct current contact (122, 120; 222, 220; 322, 320; 422, 420) each have a contact surface (120, 122; 220, 222; 320, 322; 420, 422) of greater than 50 mm².

3. The charging connector (100; 200) according to any of the foregoing claims,
**characterized in that**
the charging connector (100; 200) comprises a temperature sensor.

4. The charging connector (100; 200) according to any of the foregoing claims,
**characterized in that**
the first (120, 122; 220, 222; 320, 322; 420, 422) and second direct current contact (122, 120; 222, 220; 322, 320; 422, 420) comprise a conductive material, in particular copper.

5. The charging connector (100; 200) according to any of the foregoing claims,
**characterized in that**
the first (120, 122; 220, 222; 320, 322; 420, 422) and second direct current contact (122, 120; 222, 220; 322, 320; 422, 420) are electrically insulated from each other and/or from the at least one alternating current contact (110, 112, 114; 210, 212, 214) and from the neutral conductor contact (116; 216) by an insulating layer (130, 132).

6. The charging connector (100; 200) according to any of the foregoing claims,
**characterized in that**
the first (120, 122; 220, 222; 320, 322; 420, 422) and second direct current contact (122, 120; 222, 220; 322, 320; 422, 420) are arranged symmetrically with respect to a central axis (124) of a plug face of the charging connector (100; 200).

7. The charging connector (100; 200) according to any of the foregoing claims,
**characterized in that**
the charging connector (100; 200) comprises a third (120, 122; 220, 222; 320, 322; 420, 422) and/or further direct current contacts (122, 120; 222, 220; 322, 320; 422, 420).

8. The charging connector (100; 200) according to any of the foregoing claims,
**characterized in that**
the charging connector (100; 200) comprises a protective cover that covers the first (120, 122; 220, 222; 320, 322; 420, 422) and second direct current contact (122, 120; 222, 220; 322, 320; 422, 420) in an unplugged state.

9. The charging connector according to claim 6,
**characterized in that**
the protective cover has a camera shutter-like shutter.

10. The charging connector (100; 200) according to any of the foregoing claims,
**characterized in that**
the charging connector (100; 200) comprises a cable (126) with at least one alternating current core, a neutral conductor core and a first and second direct current core.

11. The charging connector (100; 200) according to any of the foregoing claims,
**characterized in that**
the charging connector (100; 200) comprises at least one pressing element, in order, in a plugged-in state, to press the first (120, 122; 220, 222; 320, 322; 420, 422) and second direct current contact (122, 120; 222, 220; 322, 320; 422, 420) against counter contacts (120, 122; 220, 222; 320, 322; 420, 422).

12. The charging connector (100; 200) according to any of the foregoing claims,
**characterized in that**
the charging connector (100; 200) comprises a plug (100), a socket (200), a coupling or an outlet.

13. A charging connection system having a first charging connector (100; 200) according to any of the foregoing claims for electrical connection to a charging connector of an electric vehicle,
a second charging connector (100; 200) according to any of the foregoing claims for electrical connection to a charging point and
a cable (126) which electrically connects the first charging connector (100; 200) to the second charging connector (100; 200).

## Revendications

1. Connecteur enfichable de charge (100 ; 200) pour charger un véhicule électrique avec du courant continu et/ou alternatif comprenant :
une partie de contact cylindrique (102 ; 202 ; 302 ; 402),
dans lequel la partie de contact cylindrique (102 ; 202 ; 302 ; 402) présente au moins un contact de courant alternatif (110, 112, 114 ; 210, 212, 214) et un contact de conducteur neutre (116 ; 216), et
un premier (120, 122 ; 220, 222 ; 320, 322 ; 420, 422) et un deuxième contact de courant continu (122, 120 ; 222, 220 ; 322, 320 ; 422, 420),
dans lequel le premier (120, 122 ; 220, 222 ; 320, 322 ; 420, 422) et deuxième contact de courant continu (122, 120 ; 222, 220 ; 322, 320 ; 422, 420) sont réalisés sous la forme de surfaces de contact (120, 122 ; 220, 222 ; 320, 322 ; 420, 422),
**caractérisé en ce que**
les surfaces de contact (120, 122 ; 220, 222 ; 320, 322 ; 420, 422) sont bombées et disposées en affleurement sur la surface d'enveloppe de la partie de contact cylindrique (102 ; 202 ; 302 ; 402).

2. Connecteur enfichable de charge (100 ; 200) selon la revendication 1, **caractérisé en ce que** le premier (120, 122 ; 220, 222 ; 320, 322 ; 420, 422) et deuxième contact de courant continu (122, 120 ; 222, 220 ; 322, 320 ; 422, 420) présentent respectivement une surface de contact (120, 122 ; 220, 222 ; 320, 322 ; 420, 422) supérieure à 50 mm²,

3. Connecteur enfichable de charge (100 ; 200) selon l'une quelconque des revendications précédentes,
**caractérisé en ce que**
le connecteur enfichable de charge (100 ; 200) comprend un capteur de température.

4. Connecteur enfichable de charge (100 ; 200) selon l'une quelconque des revendications précédentes,
**caractérisé en ce que**
le premier (120, 122 ; 220, 222 ; 320, 322 ; 420, 422) et deuxième contact de courant continu (122, 120 ; 222, 220 ; 322, 320 ; 422, 420) comprennent un matériau conducteur, en particulier du cuivre.

5. Connecteur enfichable de charge (100 ; 200) selon l'une quelconque des revendications précédentes,
**caractérisé en ce que**
le premier (120, 122 ; 220, 222 ; 320, 322 ; 420, 422) et deuxième contact de courant continu (122, 120 ; 222, 220 ; 322, 320 ; 422, 420) sont isolés électriquement l'un de l'autre et/ou du au moins un contact de courant alternatif (110, 112, 114 ; 210, 212, 214) et du contact de conducteur neutre (116 ; 216) par une couche isolante (130, 132).

6. Connecteur enfichable de charge (100 ; 200) selon l'une quelconque des revendications précédentes,
**caractérisé en ce que**
le premier (120, 122 ; 220, 222 ; 320, 322 ; 420, 422) et deuxième contact de courant continu (122, 120 ; 222, 220 ; 322, 320 ; 422, 420) sont disposés de manière symétrique par rapport à un axe médian (124) d'une face de connecteur du connecteur enfichable de charge (100 ; 200).

7. Connecteur enfichable de charge (100 ; 200) selon l'une quelconque des revendications précédentes,
**caractérisé en ce que**
le connecteur enfichable de charge (100 ; 200) comprend un troisième (120, 122 ; 220, 222 ; 320, 322 ; 420, 422) et/ou d'autres contacts de courant continu (122, 120 ; 222, 220 ; 322, 320 ; 422, 420).

8. Connecteur enfichable de charge (100 ; 200) selon l'une quelconque des revendications précédentes,
**caractérisé en ce que**
le connecteur enfichable de charge (100 ; 200) comprend un cache protecteur, qui recouvre le premier (120, 122 ; 220, 222 ; 320, 322 ; 420, 422) et deuxième contact de courant continu (122, 120 ; 222, 220 ; 322, 320 ; 422, 420) dans un état non enfiché.

9. Connecteur enfichable de charge selon la revendication 6,
**caractérisé en ce que**
le cache protecteur présente une fermeture du type obturateur de caméra.

10. Connecteur enfichable de charge (100 ; 200) selon l'une quelconque des revendications précédentes,
**caractérisé en ce que**
le connecteur enfichable de charge (100 ; 200) comprend un câble (126) avec au moins un brin de courant alternatif, un brin de conducteur neutre et un premier et deuxième brin de courant continu.

11. Connecteur enfichable de charge (100 ; 200) selon l'une quelconque des revendications précédentes,
**caractérisé en ce que**
le connecteur enfichable de charge (100 ; 200) comprend au moins un élément de pression, afin dans un état enfiché de presser le premier (120, 122 ; 220, 222 ; 320, 322 ; 420, 422) et deuxième contact de courant continu (122, 120 ; 222, 220 ; 322, 320 ; 422, 420) sur des contacts complémentaires (120, 122 ; 220, 222 ; 320, 322 ; 420, 422).

12. Connecteur enfichable de charge (100 ; 200) selon l'une quelconque des revendications précédentes,
**caractérisé en ce que**
le connecteur enfichable de charge (100 ; 200) comprend une fiche (100), une douille (200), un dispositif de couplage ou une prise de courant.

13. Système de connexion enfichable de charge avec
un premier connecteur enfichable de charge (100 ; 200) selon l'une quelconque des revendications précédentes pour la connexion électrique à un connecteur enfichable de charge d'un véhicule électrique,
un deuxième connecteur enfichable de charge (100 ; 200) selon l'une quelconque des revendications précédentes pour la connexion électrique à un point de charge et
un câble (126), qui connecte électriquement le premier connecteur enfichable de charge (100 ; 200) au deuxième connecteur enfichable de charge (100 ; 200).
